# EUROPÄISCHE PATENTSCHRIFT

(11) **EP 2 140 168 B1**
(45) Veröffentlichungstag und Bekanntmachung des Hinweises auf die Patenterteilung: **05.06.2013**
(21) Anmeldenummer: 08748778.1
(22) Anmeldetag: 25.04.2008
(51) Int. Cl.: F16F 7/10

(54) **VORRICHTUNG ZUR SCHWINGUNGSTILGUNG**
DEVICE FOR DAMPING VIBRATIONS
DISPOSITIF D'AMORTISSEMENT DE VIBRATIONS

(30) Priorität: 27.04.2007 DE 102007020050
(43) Veröffentlichungstag der Anmeldung: 06.01.2010
(73) Patentinhaber: Fraunhofer-Gesellschaft zur Förderung der angewandten Forschung e.V., 80686 München (DE)
(72) Erfinder: HEROLD, Sven, 64823 Gross-Umstadt (DE); MAYER, Dirk, 64295 Darmstadt (DE)
(74) Vertreter: Rösler, Uwe
(86) Internationale Anmeldenummer: PCT/DE2008/000710
(87) Internationale Veröffentlichungsnummer: WO 2008/131740

(56) Entgegenhaltungen:
- EP-B- 1 392 987
- DE-A1-102005 005 770
- FR-A- 2 784 350
- JP-A- 62 251 542

## Beschreibung

### Technisches Gebiet

Die Erfindung bezieht sich auf eine Vorrichtung zur Schwingungstilgung, die an eine mechanische Struktur anbringbar oder in diese integrierbar ist, mit wenigstens einer über ein elastisches Mittel mittel- oder unmittelbar mit der Struktur in Wirkverbindung stehenden Masse und wenigstens einem Aktor zur Veränderung einer dem elastischen Mittel zuordenbaren Steifigkeit.

### Stand der Technik

Gattungsgemäße Vorrichtungen zur Schwingungstilgung dienen der gezielten Dämpfung bestimmter Schwingungszustände einer mechanischen Struktur, in dem die Schwingungsenergie der in Schwingungen versetzten mechanischen Struktur gezielt entzogen wird. Aus einer Reihe von Druckschriften, der DE 40 37 786, DE 41 21 746 C2 sowie DE 199 57 774 C1, um nur einige zu nennen, gehen mechanische Tilgersysteme hervor, die allesamt über eine Tilgerrmasse verfügen, die über eine zumeist aus Elastomerwerkstoff bestehende Federanordnung elastisch an die mechanische Struktur gekoppelt ist und der mechanischen Struktur im Falle einer resonanten Schwingungsüberhöhung Schwingungsenergie entzieht.

Eine Anpassung der Tilgereigenschaften erfolgt in aller Regel über eine Änderung der Elastizität bzw. Steifigkeit der Federanordnung. Üblicherweise erfolgt eine derartige Anpassung im Vorfeld der Umsetzung durch konstruktive Auslegung des elektromechanischen Tilgersystems.

Ein grundsätzliches Problem das Tilgersystemen anhaftet, betrifft die frequenzspezifische Auslegung in Bezug auf eine gezielt zu dämpfende Eigenfrequenz der mechanischen Struktur, an der das Tilgersystem zum Einsatz kommen soll, d.h. das Tilgersystem wird so ausgelegt, dass der Tilgungspunkt und die Eigenfrequenz der mechanischen Struktur zusammenfallen. Typischerweise sind an sich bekannte Tilgersysteme lediglich für einen Tilgungspunkt bzw. über die Dämpfung definiert bzw. für ein sehr schmales Tilgungsband ausgelegt. Ändern sich die mechanischen Eigenschaften der zu dämpfenden mechanischen Struktur, d.h. fallen Tilgungspunkt und Eigenfrequenz der zu tilgenden Struktur nicht mehr überein, so verliert das Tilgungssystem seine Wirkung. In besonders kritischen Fällen ist es sogar denkbar, dass eine Frequenzverstimmung zwischen Tilgungspunkt und Eigenfrequenz der an sich zu dämpfenden mechanischen Struktur dazu führt, dass die mechanische Struktur bei einer geänderten Eigenresonanz schwingt und dies mit Schwingungsamplituden die im Vergleich zu einer ungetilgten mechanischen Struktur deutlich größer ausfallen. Demzufolge besteht der Wunsch, die Tilgereigenschaften bedarfsgerecht, im Idealfall automatisch nachzustimmen. Derartige Ansätze finden sich in der Auslegung so genannter aktiver bzw. adaptiver Tilgersysteme, bei denen der aktuelle Schwingungszustand einer zu dämpfenden mechanischen Struktur sensoriell erfasst und in Abhängigkeit des aktuell erfassten Schwingungszustandes wenigstens ein an der mechanischen Struktur vorgesehener Aktor in Gegenschwingungen versetzt wird oder durch den Aktor das Schwingungs- und/oder Dämpfungsverhalten des Tilgers beeinflusst wird, wodurch dem störenden Schwingungszustand der mechanischen Struktur entgegen gewirkt werden kann.

So geht aus der DE 103 51 243 B4 ein adaptiver Schwingungstilger hervor, der im Wesentlichen aus einer langgestreckten Blattfeder besteht, deren ein Ende mit einer schwingungszubedämpfenden Struktur und deren anderes Ende mit einer Tilgermasse verbunden ist. Im einfachsten Fall sind beide Blattfederenden zusätzlich mit einem Seilzug verbunden, der durch einen Linearaktor verkürzt oder verlängert eingestellt werden kann, wodurch die Biegesteifigkeit der Blattfeder kontrollierbar ist. In Abhängigkeit des Schwingungsverhaltens der Struktur lässt sich der Tilgerpunkt durch entsprechende Aktoransteuerung und einer dadurch initiierbaren Längung des Seilzuges einstellen.

Aus der DE 10 2005 005 770 A1 ist ein frequenzvariabler Tilger, vorzugsweise zur gezielten Schwingungsdämpfung von Flugzeugkomponenten bekannt. Hierbei weist der frequenzvariable Tilger im Wesentlichen ein hohlzylinderförmig ausgebildetes Elastomer auf, das beidseitig gasdicht zum einen von der schwingenden Struktur und andererseits von der Tilgermasse begrenzt wird. Zur Variation der elastischen Eigenschaften des Elastomers wird über ein Leitungssystem der Innendruck des vom Elastomer umgebenden Hohlraumes entsprechend variiert. Notwendigerweise bedarf es hierzu entsprechende Pumpvorrichtungen und Ventileinheiten, um das vom Elastomer gasdicht umschlossene Volumen druckvariabel zu speisen.

Den bisher bekannten aktiven bzw. adaptiven Tilgersystemen ist trotz ihrer unterschiedlichen Ausgestaltungsformen gemeinsam, dass zur aktorisch unterstützten Einstellung des Tilgerpunktes eine externe Energiezuführung, sei es in Form elektrischer, hydraulischer oder pneumatischer Energie, erforderlich ist, so dass ihr Einsatzbereich beschränkt ist auf schwingungs zu bedämpfende Strukturen und Komponenten, die eine entsprechende Energieversorgung ermöglichen.

### Darstellung der Erfindung

Der Erfindung liegt die Aufgabe zugrunde, eine Vorrichtung zur Schwingungstilgung anzugeben, die an eine mechanische Struktur anbringbar oder in diese integrierbar ist, mit wenigstens einer über ein elastisches Mittel mittel- oder unmittelbar mit der Struktur in Wirkverbindung stehenden Masse, die sogenannte Tilgermasse, und wenigstens einem Aktor zur Veränderung einer dem elastischen Mittel zuordenbaren Steifigkeit, derart, dass keine externe Energieversorgung zur gezielten Veränderung der Steifigkeit des elastischen Mittels zu Zwecken einer optimierten Schwingungstilgung an der schwingungs zu bedämpfenden Struktur erforderlich ist. Insbesondere soll es möglich sein, die Bauform eines Schwingungstilgers kompakt sowie auch robust auszugestalten, so dass sich der Einsatzbereich derartiger Schwingungstilger auch in Bereiche und Komponenten erstrecken lässt, die für eine Energieversorgung jeglicher Art unzugänglich sind, wie beispielsweise rotierende Bauteile, in stellvertretender Nennung zu vielen anderen Einsatzbereichen. Gleichsam den bekannten adaptiven Schwingungstilgersystemen soll auch ein lösungsgemäß ausgebildeter Schwingungstilger zumindest gleiche oder verbesserte Tilgereigenschaften besitzen.

Die Lösung der der Erfindung zugrunde liegenden Aufgabe ist im Anspruch 1 angegeben. Den Erfindungsgedanken vorteilhaft weiterbildende Merkmale sind Gegenstand der Unteransprüche sowie der weiteren Beschreibung unter Bezugnahme auf die Ausführungsbeispiele zu entnehmen.

Eine lösungsgemäße Vorrichtung zur Schwingungstilgung mit den Merkmalen des Oberbegriffes des Anspruches 1 zeichnet sich dadurch aus, dass eine elektrische Energiequelle vorgesehen ist, die es vermag ausschließlich unter Nutzung einer zwischen der Tilgermasse und der Struktur einstellenden, oszillierenden Relativbewegung elektrische Energie zu erzeugen und dass eine mit der elektrischen Energiequelle verbundene Regeleinheit vorgesehen ist, die in Abhängigkeit vom Schwingungsverhalten der Struktur und unter Zugrundelegung einer Schwingungstilgungsregel den wenigstens einen Aktor aktiviert.

Dem lösungsgemäßen Schwingungstilgersystem liegt die Idee zugrunde, dass wenigstens die zur adaptiven Anpassung der Tilgerfrequenz erforderlichen elektrischen oder elektronischen Komponenten mit ausreichend elektrischer Energie versorgt werden, die in autarker Weise letztlich durch Energiewandlung der relativen Schwingungsbewegung zwischen Tilgermasse und mechanischer Struktur am Ort der Schwingungstilgung erzeugt wird. Somit entfallen jegliche Energieversorgungsleitungen zum Tilgersystem, so dass dieses an unzugänglichen Orten und Komponenten anbringbar ist. Das neuartige Tilgersystem stellt somit eine autonom bzw. autark arbeitende Insellösung dar.

Besonders bevorzugte Systeme zur Gewinnung elektrischer Energie aus Schwingungen, d.h. letztlich aus Bewegungsenergie, basieren entweder auf dem elektromechanischen Wandlerprinzip, beispielsweise auf Basis des piezoelektrischen oder magnetostriktiven Effektes, oder auf dem elektrodynamischen Prinzip, bei dem ein elektrischer Leiter, vorzugsweise eine Spulenanordnung innerhalb eines Magnetfeldes bewegt wird, wodurch in Folge der an den innerhalb des Leiters enthaltenen Ladungsträgern angreifenden Lorenzkräfte ein elektrischer Stromfluss im Leiter eingeprägt wird.

Das lösungsgemäß autark arbeitende, adaptiv wirkende Schwingungstilgungssystem weist in einer bevorzugten Ausführungsform wenigstens einen Schwingungssensor auf, der den aktuellen Schwingungszustand bzw. das Schwingungsverhalten der Struktur erfasst und Sensorsignale generiert, die der Regeleinheit zur weiteren Auswertung zugeführt werden. Die Regeleinheit selbst generiert unter Zugrundelegung einer Schwingungstilgungsregel Ansteuersignale für den wenigstens einen Aktor, der die Elastizität bzw. die Steifigkeit des elastischen Mittels gezielt zu beeinflussen vermag, wodurch die Schwingungstilgungsfrequenz exakt abstimmbar auf das aktuelle Schwingungsverhalten der Struktur ist, um diese letztlich optimiert zu dämpfen. Sowohl die Sensoreinheit, die Regeleinheit als auch der Aktor bedürfen für ihre Funktion einer elektrischen Energieversorgung, die in der lösungsgemäß vorgeschlagenen Weise vor Ort durch die vorstehend beschriebene elektrische Energiequelle zur Verfügung gestellt wird. Sollte zeitweise mehr elektrische Energie zur Verfügung stehen als die entsprechenden elektrischen bzw. elektronischen Komponenten zum Verbrauch in der Lage sind, so kann in bevorzugter Weise ein zusätzlicher Energiespeicher, beispielsweise in Form eines Akkumulators oder einer kapazitiven Anordnung, vorgesehen werden. Auch ist es möglich, weitere elektrische Verbraucher vorzusehen, die bei einem Überangebot an elektrischer Energie entsprechend gespeist werden können, beispielsweise eine kabellose Informationsaustauscheinheit, über die drahtlos unterschiedliche Schwingungstilgungsregeln übermittelt werden können oder einen einstellbaren elektrischen Widerstand.

Zudem erfolgt die Schwingungstilgung auf zweiertei Arten, nämlich zum einen im Wege der aktiven Einflussnahme des mechanischen Tilgersystems auf das aktuelle Schwingungsverhalten der schwingungs zu bedämpfenden Struktur, zum anderen trägt auch die elektrische Energiequelle selbst durch eine kontinuierliche Energieabfuhr im Wege der Energiewandlung von Schwingungsenergie in elektrische Energie dazu bei, die Strukturschwingungen zusätzlich zu dämpfen. Durch eine gezielte Energieabführung im Wege der vorstehenden Energiewandlung kann die Dämpfung des Tilgers und/oder der mechanischen Struktur beeinflusst werden.

Das autark arbeitende Schwingungstilgungssystem zeichnet sich vorteilhaft insbesondere dadurch aus, dass jegliche Verkabelungen eingespart werden können, die bei bis anhin bekannten Tilgersystemen für eine externe Energiezuführung erforderlich sind. Dies führt desweiteren zu dem Vorteil, dass das adaptiv arbeitende Tilgersystem auch an Orten und Komponenten eingesetzt werden kann, die für herkömmliche Tilgersysteme unzugänglich sind. Dies sind vor allem rotierende Komponenten in Produktions- und Werkzeuganlagen, Offshore-Konstruktionen, die ohnehin als autark arbeitende Systeme auszubilden sind, große Bauwerke, wie beispielsweise Brücken, insbesondere in Bereichen, die schwer bis nicht zugänglich sind, sowie auch Bereiche der Automobiltechnik, in denen eine Energieversorgung nur unverhältnismäßig komplizierte und letztlich teuere Verkabelungen erfordern.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: Ersatzschaltbild für einen energieautarken adaptiven Schwingungstilger,
- Fig. 2: bevorzugtes Ausführungsbeispiel zur Realisierung eines adaptiv arbeitenden Schwingungstilgers, sowie
- Fig. 3: weiteres alternatives Ausführungsbeispiel für einen energieautark arbeitenden adaptiven Schwingungstilger.

### Wege zur Ausführung der Erfindung, gewerbliche Verwendbarkeit

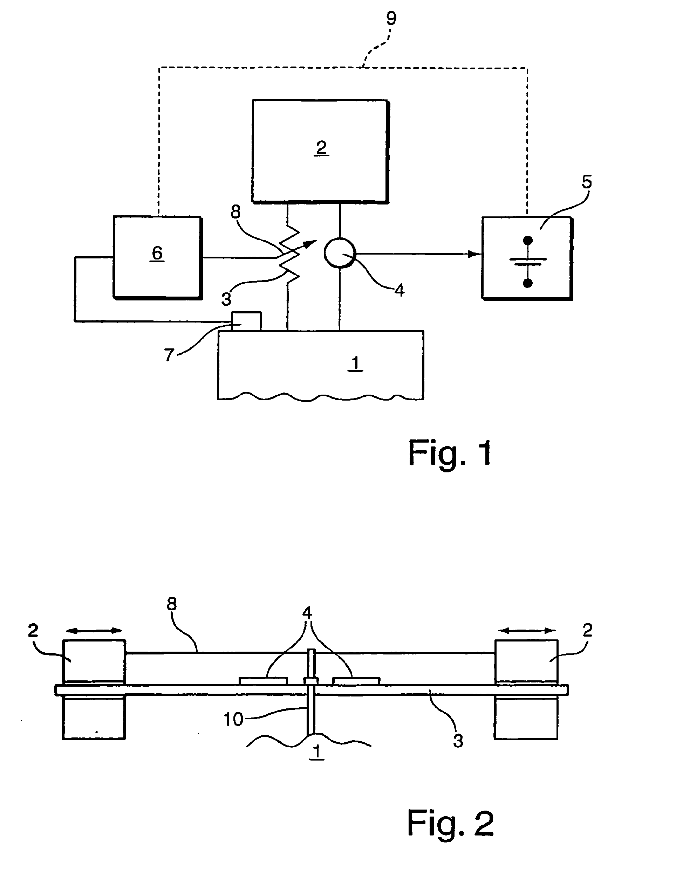

Figur 1 zeigt ein schematisiertes Ersatzschaltbild für einen energieautark arbeitenden, adaptiven Schwingungstilger, der eine schwingende Struktur 1 möglichst effektiv dämpfen soll. Der Schwingungstilger weist hierzu eine Tilgermasse 2 auf, die über ein elastisches Mittel 3, beispielsweise in Form eines Federelementes bzw. Federsystems mit der Struktur 1 verbunden ist. Das elastische Mittel 3 verfügt dabei über eine Elastizität bzw. Steifigkeit, die variabel einstellbar ist. Die weiteren Ausführungsbeispiele werden zeigen, wie eine derartige variable Elastizitätseinstellung des elastischen Mittels konkret realisierbar ist. Im Übrigen können auf an sich bekannte diesbezügliche Lösungen aus dem Stand der Technik zurückgegriffen werden. Zudem ist eine elektrische Energiequelle 4 vorgesehen, die die relative Schwingungsbewegung der Tilgermasse 2 relativ zur schwingenden Struktur 1 in elektrische Energie überzuführen vermag. In dem Ersatzschaltbild in Figur 1 sei dies dadurch illustriert, dass die elektrische Energiequelle 4 in Wirkverbindung zwischen der Struktur 1 und der Tilgermasse 2 steht, vorzugsweise längs des elastischen Mittels 3 aufgebracht ist, wie dies aus einem der im Weiteren beschriebenen konkreten Ausführungsbeispielen zu entnehmen ist. Die mit Hilfe der elektrischen Energiequelle 4 erzeugte elektrische Energie wird im dargestellten Ersatzschaltbild in einem Energiespeicher 5 ab- bzw. zwischengespeichert und letztlich zur elektrischen Energieversorgung über eine Versorgungsleitung 9 an die folgenden elektrischen Komponenten weitergeführt: So ist eine Regeleinheit 6 vorgesehen, in der Sensorsignale eines Schwingungssensors 7, der den Schwingungszustand der Struktur 1 erfaßt und hierzu direkt mit dieser verbunden ist, unter Zugrundelegung einer Schwingungstilgungsregel bzw. eines Schwingungstilgungsalgorithmuses für eine möglichst optimierte Schwingungsbedämpfung ausgewertet werden, wobei letztlich Aktivierungssignale für einen Aktor 8 generiert werden, der die Elastizität bzw. Steifigkeit des elastischen Mittels 3 gezielt zu beeinflussen vermag.

Der in Figur 1 schematisiert dargestellte lösungsgemäße Schwingungstilger entspricht einem rein mechanisch arbeitendem Tilgersystem, dessen Ziel es ist, die Tilgermasse 2, die über das elastische Mittel 3 an die mechanische Struktur 1 freischwingend gekoppelt ist, mit einer Schwingungsfrequenz oszillieren zu lassen, wodurch der schwingenden Struktur 1 möglichst viel Schwingungsenergie entzogen werden kann. Zur Einstellung der hierfür optimalen Tilgerfrequenz bedarf es einer aktiven Regelung der Elastizität bzw. Steifigkeit des elastischen Mittels 3 im Wege eines Regelkreises, der sich aus dem Schwingungssensor 7, der Regeleinheit 6 sowie dem Aktor 8 zusammensetzt. Die im Regelkreis enthaltenen elektrischen Komponenten bedürfen jedoch der elektrischen Energieversorgung, die über die elektrische Zuleitung 9 schematisiert dargestellt ist. Die hierfür erforderliche elektrische Energie wird wie vorstehend erläutert autark, d.h. ohne Zuführung externer Energie innerhalb des lösungsgemäß ausgebildeten Tilgersystems gewonnen.

Figur 2 zeigt ein konkretes Ausführungsbeispiel eines lösungsgemäß ausgebildeten Tilgers, wobei die dargestellten Komponenten in Figur 2 lediglich die schwingungs zu bedämpfende Struktur 1, die Tilgermasse 2, das elastische Mittel 3, den Aktor 8 sowie die elektrische Energiequelle 4 zeigt.

So sei angenommen, dass längs eines stabförmig ausgebildeten Distanzstückes 10 ein länglich bzw. stabförmig ausgebildetes elastisches Mittel 3 derart angebracht ist, dass das elastische Mittel 3 momentenfrei am stabförmigen Mittel 10 befestigt ist. So kann beispielsweise angenommen werden, dass das elastische Mittel 3 als balkenartige Blattfeder 3 ausgebildet ist. Beidseitig und symmetrisch zum Auflagepunkt am stabförmigen Mittel 10 der Balkenfeder 3 sind auf dieser längsbeweglich Tilgermassen 2 vorgesehen. Beide Tilgermassen 2 sind zudem mit einem Aktor 8 verbunden, der es vermag die Tilgermassen 2 längs des Federbalkens 3 jeweils symmetrisch zum stabförmigen Mittel 10 zu bewegen. Es liegt auf der Hand, dass das Schwingungsverhalten der Blattfeder 3 durch entsprechende Verschiebung der Tilgermassen 2 relativ zur Blattfeder 3 veränderlich eingestellt werden kann. Der Aktor 8 ist dabei derart auszubilden, so dass er sowohl Zug- als auch Schubkräfte in Längsrichtung zum Federbalken 2 zwischen den beiden längsverschieblich gelagerten Tilgermassen 2 zu übertragen vermag. Beispielsweise kann hierfür ein SMA-Draht mit Rückstellfeder dienen.

Die elektrische Energiequelle 4 ist im Ausführungsbeispiel gemäß Figur 2 in Form von piezoelektrischen Elementen realisiert, die auf der Oberfläche des sich durchbiegenden Federbalkens 3 aufgebracht sind. Durch Deformation der piezoelektrischen Elemente 4 erfolgt eine Verschiebung der im Inneren der piezoelektrischen Elemente vorhandenen Ladungsträger, wodurch eine elektrische Spannung generiert wird, die in geeigneter Weise abgegriffen werden kann.

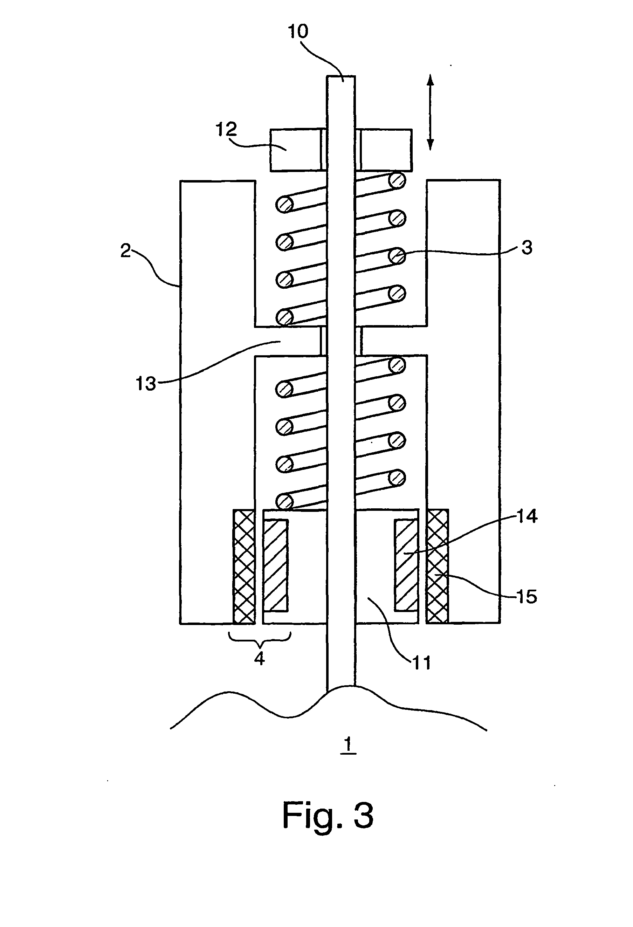

Eine weitere Ausführungsform ist in Figur 3 dargestellt. In diesem Fall ist gleichsam zum vorstehenden Ausführungsbeispiel ein stabförmig ausgebildetes Mittel 10 vorgesehen, das einseitig mit der schwingungs zu bedämpfenden mechanischen Struktur 1 verbunden ist. Längs des stabförmig ausgebildeten Mittels 10 ist ein mechanischer Anschlag 11 vorgesehen, der mit dem stabförmig ausgebildeten Mittel 10 fest verbunden ist. Ein Federelement 3 drückt einseitig gegen den mechanischen Anschlag 11, wohingegen das andere Federende an einen aktorischen Gegenhalter 12 angrenzt, der längsbeweglich zum stabförmig ausgebildeten Mittel 10 gelagert ist. Femer ist eine Tilgermasse 2 vorgesehen, die eine symmetrische, das stabförmige Mittel 10 umgebende Form aufweist, beispielsweise hohlzylinderförmig ausgebildet ist, und über einen inneren gelochten Zwischensteg 13 längs des stabförmig ausgebildeten Mittels 10 linear beweglich zwangsgeführt ist. Zugleich wird die Tilgermasse 2 durch Eingriff in das Federelement 3 in einer axialen Position federkraftbeaufschlagt schwingend gehalten. Desweiteren basiert in dem Ausführungsbeispiel gem. Figur 3 die elektrische Energiequelle 4 auf dem elektrodynamischen Wirkprinzip, d.h. am peripheren Umfangsrand des mechanischen Anschlages 11 ist ein Spulensystem 14 vorgesehen, das radial innenliegend gegenüber einem Magnetsystem 15 beabstandet angeordnet ist, das ein Permanentmagnetfeld erzeugt. Das Magnetsystem 7 ist in der Tilgermasse 2 gemäß Bilddarstellung in Figur 3 integriert.

Aufgrund der durch die mechanische Struktur 1 auf das Tilgersystem ausgeübten Schwingungen erfährt die Tilgermasse 2 oszillierende Auslenkungen axial relativ zum stabförmig ausgebildeten Mittel 10. Die oszillierende Auslenkungen bzw. Schwingungen werden letztlich bestimmt durch die Steifigkeit bzw. Federhärte des Federelementes 3. An dem Spulensystem 6 kann im Wege des elektrodynamischen Wirkprinzipes eine elektrische Spannung abgegriffen werden, die zur weiteren Stromversorgung aller im Tilgersystem enthaltenen elektrischen Komponenten erforderlich ist. Zur adaptiven Tilgerfrequenzanpassung gilt es den aktorischen Gegenhalter 12 axial relativ zum stabförmig ausgebildeten Mittel 10 zu verschieben, wodurch das Federelement 3 in geeigneter Weise verpresst wird. Das Federelement 3 verfügt über eine nichtlineare Steifigkeit, durch die eine einstellbare Variabilität der Tilgerfrequenz erhalten werden kann.

### Bezugszeichenliste

- 1: mechanische Struktur
- 2: Tilgermasse
- 3: elastisches Mittel, Federelement
- 4: elektrische Energiequelle
- 5: Energiespeicher
- 6: Regeleinheit
- 7: Schwingungssensor
- 8: Aktor
- 9: Energieversorgungsleitung
- 10: stabförmig ausgebildetes Mittel
- 11: mechanischer Anschlag
- 12: Aktorischer Gegenhalter
- 13: Zwischensteg
- 14: Spulensystem
- 15: Magnetsystem

## Patentansprüche

1. Vorrichtung zur Schwingungstilgung, die an eine mechanische Struktur (1). anbringbar oder in diese integrierbar ist, mit wenigstens einer über ein elastisches Mittel (3) mittel- oder unmittelbar mit der Struktur in Wirkverbindung stehenden Masse (2),
die so genannten Tilgermasse, und wenigstens einem Aktor (8) zur Veränderung einer dem elastischen Mittel (3) zuordenbaren Steifigkeit,
**dadurch gekennzeichnet, dass** eine elektrische Energiequelle (4) vorgesehen ist, die es vermag ausschließlich unter Nutzung einer sich zwischen der Tilgermasse (2) und der Struktur (1) einstellenden, oszillierenden Relativbewegung elektrische Energie zu erzeugen, und
dass eine mit der elektrischen Energiequelle (4) verbundene Regeleinheit (6) vorgesehen ist, die in Abhängigkeit vom Schwingungsverhalten der Struktur und unter Zugrundelegung einer Schwingungstilgungsregel den wenigstens einen Aktor (8) aktiviert.

2. Vorrichtung nach Anspruch 1,
**dadurch gekennzeichnet, dass** wenigstens ein mit der Struktur mittel- oder unmittelbar in Wirkverbindung stehender Schwingungssensor (7) vorgesehen ist, der mit der Regeleinheit (6) und der elektrischen Energiequelle (4) verbunden ist.

3. Vorrichtung nach Anspruch 1 oder 2,
**dadurch gekennzeichnet, dass** die elektrische Energiequelle (4) einen elektromechanischen Wandlerwerkstoff aufweist, der aus wenigstens einer der nachfolgenden Werkstoffklassen besteht: Piezo-Keramik, elektrostriktive Keramik, magnetostriktive Keramik.

4. Vorrichtung nach Anspruch 1 oder 2,
**dadurch gekennzeichnet, dass** die elektrische Energiequelle (4) wenigstens einen relativ zu einem durch eine Magneteinheit (15) erzeugten Magnetfeld beweglich angeordneten elektrischen Leiter vorsieht.

5. Vorrichtung nach einem der Ansprüche 1 bis 4,
**dadurch gekennzeichnet, dass** die elektrische Energiequelle (4) mit einer Energiespeichereinheit (5) verbunden ist.

6. Vorrichtung nach Anspruch 5,
**dadurch gekennzeichnet, dass** die Energiespeichereinheit (5) eine Kapazität und/oder einen Akkumulator aufweist.

7. Vorrichtung nach einem der Ansprüche 1 bis 6,
**dadurch gekennzeichnet, dass** das elastische Mittel (3) stabförmig ausgebildet ist und über ein lokales Auflager frei von Momenten derart mit der Struktur (1) verbunden ist, dass die Enden des stabförmig ausgebildeten Mittels (3) frei schwingend gelagert sind, dass längs des Mittels symmetrisch zum Auflager jeweils wenigstens eine Mass (2) vorgesehen ist, die über den wenigstens einen Aktor (8) längs des Mittels bewegbar sind,
und
dass längs des stabförmigen Mittels (3) die elektrische Energiequelle (4) vorgesehen ist, die längs des stabförmigen Mittels (3) auftretende Schwingungen in elektrische Energie umzuwandeln vermag.

8. Vorrichtung nach Anspruch 7,
**dadurch gekennzeichnet, dass** als elektrische Energiequelle (4) symmetrisch zum Auflager mit dem stabförmigen Mittel verbundene elektromechanische Wandlervverkstoffe vorgesehen sind.

9. Vorrichtung nach einem der Ansprüche 1 bis 6,
**dadurch gekennzeichnet, dass** längs eines mit der Struktur (1) verbundenen, stabförmigen Zentriermittels (10) eine Masse bidirektional, auslenkbar gelagert ist,
dass die Masse mit einer als Feder (3) ausgebildeten elastischen Einheit in Wirkverbindung steht, deren Federsteifigkeit mit einem Aktor (12) veränderbar einstellbar ist, und
dass als elektrische Energiequelle (4) ein in einem Magnetfeld beweglich angeordnetes Spulensystem (14) dient.

10. Vorrichtung nach Anspruch 9,
**dadurch gekennzeichnet, dass** das stabförmige Zentriermittel (10) zwei Enden aufweist, von denen ein Ende mit der Struktur (1) verbunden ist.

11. Vorrichtung nach Anspruch 9 oder 10,
**dadurch gekennzeichnet, dass** längs des Zentriermittels (10) ein mechanischer Anschlag (11) vorgesehen ist, an dem sich die elastische Einheit einseitig abstützt, und
dass das gegenüberliegende Ende des elastischen Mittels (3) mit dem Aktor (12) in Wirkverbindung tritt, der längsbeweglich zum Zentriermittel (10) gelagert ist.

12. Vorrichtung nach Anspruch 11,
**dadurch gekennzeichnet, dass** das Spulensystem (14) im mechanischen Anschlag (11) und eine das Magnetfeld erzeugende Magneteinheit (15) in der Masse (2) integriert sind.

13. Vorrichtung nach einem der Ansprüche 9 bis 12,
**dadurch gekennzeichnet, dass** die Feder (3) eine nichtlineare Steifigkeit aufweist.

14. Vorrichtung nach einem der Ansprüche 1 bis 13,
**dadurch gekennzeichnet, dass** die elektrische Energiequelle (4) derart ausgelegt ist und in Wirkverbindung mit der mechanischen Struktur (1) steht, dass durch gezielte Energiewandlung im Wege der Umwandlung von Schwingungsenergie in elektrische Energie die mechanische Struktur (1) einer Schwingungsdämpfung unterliegt.

15. Vorrichtung nach Anspruch 14,
**dadurch gekennzeichnet, dass** die Schwingungsdämpfung durch eine Konfektionierung der elektrischen Energiequelle (4), d.h. durch ihre geometrische Ausbildung und ihre elektrischen Eigenschaften, einstellbar ist.

## Claims

1. A device for vibration damping, which is attachable to a mechanical structure (1) or integratable therein, having at least one mass (2), the so-called damper mass, which is indirectly or directly operationally linked to the structure (1) via elastic means (3), and at least one actuator (8) for changing a stiffness which can be associated with the elastic means (3),
**characterized in that** an electrical power source (4) is provided, which is capable of generating electrical power exclusively using an oscillating relative movement resulting between the damper mass (2) and the structure (1), and
a regulating unit (6), which is connected to the electrical power source (4), is provided, which activates the least one actuator (8) as a function of the vibration behavior of the structure and on the basis of a vibration damping rule.

2. The device according to Claim 1,
**characterized in that** at least one vibration sensor (7), which is indirectly or directly operationally linked to the structure, is provided, which is connected to the regulating unit (6) and the electrical power source (4).

3. The device according to Claim 1 or 2,
**characterized in that** the electrical power source (4) has an electromechanical transducer material, which comprises at least one of the following material classes: piezoceramic, electrostrictive ceramic, magnetostrictive ceramic.

4. The device according to Claim 1 or 2,
**characterized in that** electrical power source (4) provides at least one electrical conductor, which is situated so it is movable relative to a magnetic field generated by a magnet unit (15).

5. The device according to one of Claims 1 through 4,
**characterized in that** the electrical power source (4) is connected to a power storage unit (5).

6. The device according to Claim 5,
**characterized in that** the power storage unit (5) has a capacitor and/or a storage cell.

7. The device according to one of Claims 1 through 6,
**characterized in that** the elastic means (3) is formed rod-shaped and are connected via a local bearing to the structure (1) free from torque in such a way that the ends of the rod-shaped means (3) are mounted freely vibrating, at least one mass (2) is provided along the means symmetric to the bearing, which are movable via the at least one actuator (8) along the means (3), and
the electrical power source (4) is provided along the rod-shaped means (3), which is capable of converting vibrations occurring along the rod-shaped means (3) into electrical power.

8. The device according to Claim 7,
**characterized in that** electromechanical transducer materials, which are connected to the rod-shaped means symmetrically to the support, are provided as the electrical power source (4).

9. The device according to one of Claims 1 through 6,
**characterized in that** a mass is mounted so it is bidirectionally deflectable along rod-shaped centering means (10) connected to the structure (1),
the mass (2) is operationally linked to an elastic unit implemented as a spring (3), whose spring stiffness is variably settable using an actuator (12), and
a coil system (14) which is situated so it is movable in a magnetic field is used as the electrical power source (4).

10. The device according to Claim 9,
**characterized in that** the rod-shaped centering means (10) has two ends, one end of which is connected to the structure (1).

11. The device according to Claim 9 or 10,
**characterized in that** a mechanical stop (11) is provided along the centering means (10), on which the elastic unit (3) is supported on one side, and the opposite end of the elastic means (3) is operationally linked to the actuator (12), which is mounted so it is longitudinally movable to the centering means (10).

12. The device according to Claim 11,
**characterized in that** the coil system (14) is integrated in the mechanical stop (11) and a magnet unit (15) which generates the magnetic field is integrated in the mass (2).

13. The device according to one of Claims 9 through 12,
**characterized in that** the spring (3) has a nonlinear stiffness.

14. The device according to one of Claims 1 through 13,
**characterized in that** the electrical power source (4) is designed and is operationally linked to the mechanical structure (1) in such a way that through deliberate energy conversion in the course of the conversion of vibration energy into electrical power, the mechanical structure (1) is subject to a vibration damping.

15. The device according to Claim 14,
**characterized in that** the vibration damping is settable by equipping of the electrical power source (4), i.e., by its geometric implementation and its electrical properties.

## Revendications

1. Dispositif destiné à réduire les vibrations, que l'on peut monter sur une structure mécanique (1) ou qui est intégrable dans cette dernière, avec au moins une masse (2), la dénommée masse de réduction, qui est en liaison active indirecte ou directe avec la structure, par l'intermédiaire d'un moyen (3) élastique et avec au moins un actionneur (8) pour la modification d'une rigidité pouvant être associée au moyen (3) élastique,
**caractérisé en ce qu'**il est prévu une source d'énergie (4) électrique qui est capable de créer de l'énergie électrique en utilisant exclusivement un déplacement relatif oscillant s'installant entre la masse de réduction (2) et la structure (1) et
**en ce qu'**il est prévu une unité de réglage (6) reliée à la source d'énergie (4) électrique, qui en fonction du comportement en vibration de la structure et sur la base d'une règle de réduction de vibrations active l'au moins un actionneur (8).

2. Dispositif selon la revendication 1,
**caractérisé en ce qu'**il est prévu au moins un capteur de vibrations (7) qui est en liaison active indirecte ou directe avec la structure, qui est relié à l'unité de réglage (6) et à la source d'énergie (4) électrique.

3. Dispositif selon la revendication 1 ou la revendication 2,
**caractérisé en ce que** la source d'énergie (4) électrique comporte une matière de convertisseur électromécanique qui est constituée d'au moins l'une des classes de matières suivantes : piézo-céramique, céramique électrostrictive, céramique magnétostrictive.

4. Dispositif selon la revendication 1 ou la revendication 2,
**caractérisé en ce que** la source d'énergie (4) électrique prévoit un conducteur électrique disposé en étant mobile par rapport à un champ magnétique créé par une unité magnétique.

5. Dispositif selon l'une quelconque des revendications 1 à 4,
**caractérisé en ce que** la source d'énergie (4) électrique est reliée à un accumulateur d'énergie (5).

6. Dispositif selon la revendication 5,
**caractérisé en ce que** l'accumulateur d'énergie (5) comporte une capacité et/ou un accumulateur.

7. Dispositif selon l'une quelconque des revendications 1 à 6,
**caractérisé en ce que** le moyen (3) élastique est conçu en forme de tige et par l'intermédiaire d'un appui local est relié sans moment avec la structure (1), de telle sorte que les extrémités du moyen (3) conçu en forme de tige soient logées de manière à vibrer librement,
**en ce que** le long du moyen, en symétrie à l'appui est prévue chaque fois au moins une masse (2) qui est mobile par l'intermédiaire d'au moins un actionneur (8) le long du moyen et
**en ce que** le long du moyen (3) en forme de tige est prévue la source d'énergie (4) électrique qui est capable de transformer en énergie électrique des vibrations se produisant le long du moyen (3) en forme de tige.

8. Dispositif selon la revendication 7,
**caractérisé en ce que** des matières de convertisseur électromécanique reliées en symétrie de l'appui avec le moyen en forme de tige sont prévues en tant que source d'énergie (4) électrique.

9. Dispositif selon l'une quelconque des revendications 1 à 6,
**caractérisé en ce que** le long d'un moyen de centrage en forme de tige relié le long de la structure (1), une masse est logée de manière à pouvoir dévier de façon bidirectionnelle,
**en ce que** la masse est en liaison active avec une unité élastique conçue en tant que ressort (3) dont la rigidité de ressort est à réglage variable à l'aide d'un actionneur (8) et
**en ce qu'**un système de bobines (14) disposé en étant mobile dans un champ magnétique sert de source d'énergie (4) électrique.

10. Dispositif selon la revendication 9,
**caractérisé en ce que** le moyen de centrage en forme de tige comporte deux extrémités dont une extrémité est reliée à la structure (1).

11. Dispositif selon la revendication 9 ou la revendication 10,
**caractérisé en ce que** le long du moyen de centrage, il est prévu une butée (11) mécanique sur laquelle l'unité élastique s'appuie unilatéralement et
**en ce que** l'extrémité opposée du moyen (3) élastique entre en liaison active avec l'actionneur (8) qui est logé en étant déplaçable en longueur par rapport au moyen de centrage.

12. Dispositif selon la revendication 11,
**caractérisé en ce que** le système de bobines (14) est intégré dans la butée mécanique et **en ce qu'**une unité magnétique créant le champ magnétique est intégrée dans la masse (2).

13. Dispositif selon l'une quelconque des revendications 9 à 12,
**caractérisé en ce que** le ressort (3) fait preuve d'une rigidité non linéaire.

14. Dispositif selon l'une quelconque des revendications 1 à 13,
**caractérisé en ce que** la source d'énergie (4) électrique est conçue et est en liaison active avec la structure (1) mécanique de telle sorte que par une transformation ciblée d'énergie par transformation d'énergie de vibration en énergie électrique, la structure (1) mécanique soit soumise à un amortissement des vibrations.

15. Dispositif selon la revendication 14,
**caractérisé en ce que** l'amortissement de vibrations est réglable par la confection de la source d'énergie (4) électrique, c'est-à-dire par sa conception géométrique et par ses propriétés électriques.
